# EUROPÄISCHE PATENTSCHRIFT

(11) **EP 1 347 997 B1**
(45) Veröffentlichungstag und Bekanntmachung des Hinweises auf die Patenterteilung: **15.06.2005**
(21) Anmeldenummer: 01983745.9
(22) Anmeldetag: 26.11.2001
(51) Int. Cl.: C08F 220/28, C08F 222/20, C08F 222/10, C08F 220/18, C09D 4/02

(54) **RADIKALISCH POLYMERISIERBARE MASSE MIT ERHÖHTER HAFTUNG AUF MINERALISCHEN UNTERGRÜNDEN UND DEREN VERWENDUNG ALS KLEBSTOFF UND DICHTUNGSMASSE**
RADICALLY POLYMERISING MASS WITH IMPROVED ADHESION TO MINERAL BASES AND USE THEREOF AS AN ADHESIVE AND SEALING MASS
MASSE A POLYMERISATION RADICALAIRE PRESENTANT UNE FORTE ADHERENCE SUR DES SUBSTRATS MINERAUX ET SON UTILISATION EN TANT QUE MATIERE ADHESIVE ET MASSE D'ETANCHEITE

(30) Priorität: 27.11.2000 EP 00125885
(43) Veröffentlichungstag der Anmeldung: 01.10.2003
(73) Patentinhaber: Sika Schweiz AG, 8064 Zürich (CH)
(72) Erfinder: DUX, Roland, CH-8957 Spreitenbach (CH); WÜRMLI, Fabio, CH-8800 Thalwil (CH); RITTINER, Mario, CH-3907 Simplon-Dorf (CH)
(74) Vertreter: Isler, Jörg
(86) Internationale Anmeldenummer: PCT/IB2001/002233
(87) Internationale Veröffentlichungsnummer: WO 2002/042345

(56) Entgegenhaltungen:
- EP-A- 0 199 671
- EP-A- 0 431 302
- EP-A- 0 619 348
- US-A- 4 460 625
- US-A- 5 387 661

## Beschreibung

### Hinweis auf verwandte Anmeldungen

Diese vorliegende Anmeldung beansprucht die Priorität der europäischen Patentanmeldung Nr. 00 125 885.4, eingereicht am 27. November 2000.

### Technisches Gebiet

Die vorliegende Erfindung betrifft radikalisch polymerisierbare Massen, insbesondere Massen mit guter Haftung auch auf feuchten mineralischen Untergründen.

### Stand der Technik

Verklebungen und Abdichtungen im Hoch- und Tiefbau bedürfen eine dauerhaften guten Haftung auf mineralischen Untergründen. Eine Sonderstellung unter diesen Untergründen nimmt Beton ein. Da in diesen Anwendungsgebieten vielfach die Substrate feucht sind und nach der Applikation oft direktem Kontakt mit Wasser, auch über längere Zeit, ausgesetzt sind, ist einerseits die Anfangshaftung auf feuchtem Beton aber auch andererseits die Langzeithaftung unter Wasser von grosser Wichtigkeit. Sowohl eine schnelle Aushärtung, als auch eine Aushärtung bei tiefen Temperaturen, sind wirtschaftlich interessant, weil einerseits die Arbeits- und Wartezeiten reduziert werden können und andererseits Bauprojekte durch saisonal bedingte Kaltperioden nicht zu längeren Verzögerungen führen. Zunehmend wichtig ist auch im Hoch- und Tiefbau der Ökologieaspekt.

Bekannterweise zeigen Bindemittel auf Epoxidharzbasis eine äusserst gute Haftung sowie ausgezeichnete Langzeitbeständigkeit auf mineralischen Untergründen. Epoxidharzbasierende Systeme sind allerdings dahingehend beschränkt, dass einerseits eine schnelle Aushärtung bei Raumtemperatur (d.h. mit annehmbaren Anfangsfestigkeiten innerhalb von weniger als 15 Minuten) nicht möglich ist. Andererseits zeigen sich verschlechterte mechanische Eigenschaften bei einer Tieftemperaturaushärtung. Ausserdem führen die in solchen Härtern verwendeten Amine und Merkaptane zu einer starken Geruchsbelästigung, was nachteilig für die Applikation ist.

Andere Bindemittelsysteme für schnelle Klebstoffsysteme basieren auf Polyurethanen, Polyestern und Methylmethacrylaten, die allerdings alle mit Nachteilen behaftet sind. Polyurethane sind aufgrund der Empfindlichkeit von Isocyanaten gegenüber Wasser auf feuchten mineralischen Untergründen ohne Primer nicht verwendbar. Ungesättigte Polyester sind seit langem als schnelle Bindemittel für Klebstoffe und Beschichtungen bekannt, enthalten aber Styrol (oft als 'Monostyrol' bezeichnet). Neben dem starken Eigengeruch von Styrol ist durch die vermutete Karzinogenität sowie den tiefen Flammpunkt (32°C) eine Verwendung aus arbeitshygienischen sowie sicherheitstechnischen Gesichtspunkten nicht zu empfehlen. Weiterhin sind seit langem Bindemittel für schnelle Klebstoff- und Beschichtungssysteme auf Basis von Methylmethacrylat bekannt. Bisher bekannte Methylmethacrylat-Systeme zeichnet sich einerseits durch einen störenden Eigengeruch sowie einen extrem grossen Reaktionsschrumpf aus, andererseits ist die Haftung auf feuchten mineralischen Untergründen mangelhaft.

Hydrophile (Meth)acrylate, speziell Hydroxyalkyl(meth)acrylate, beziehungsweise wässrige Lösungen dieser Monomere, werden schon lange zur Verfestigung von Böden und Gesteinen verwendet. Als typische Beispiele hierfür seien GB 1 335 714 und GB 1 303 456 angeführt. Obwohl eine ausgezeichnete Anfangshaftung auf feuchten mineralischen Untergründen erreicht werden kann, sind solche Bindemittel für Klebstoffe und Beschichtungen nicht geeignet, da eine erhöhte Wasseraufnahme sowie ein Haftungsversagen nach längerer Wasserexposition festgestellt werden kann.

Es ist ebenfalls bereits bekannt, dass ein zu hoher Anteil an hydrophilen Einheiten zu hoher Wasseraufnahme und damit zu einem schnellen Abbau der Festigkeit und der Haftung führt, was in der Literatur, beispielsweise 'Adhesives in civil engineering, ed. G.C. Mays, Cambridge University Press, 1992, durch den Weichmachereffekt des Wassers erklärt wird.

Eine Möglichkeit der Hydrophobisierung ist in der Patentschrift EP 0 157 596 beschrieben, welche eine Imprägnierung betrifft, bestehend aus einer Hydroxyalkylacrylat/Dicyclopentenyloxyalkylacrylat-Mischung und Fettsäuren. Die mit einer solchen hydrophobisierten Imprägnierung versehenen Betonuntergründe weisen eine merklich kleinere Wasseraufnahme und Beständigkeit auf. Die Funktion einer Imprägnierung liegt jedoch weniger in der Gewährleistung eines Haftverbundes als primär in einer Barrierewirkung und somit im Schutz des Untergrundes vor Wasser und darin gelöster aggressiver Bestandteile. Bei einer Imprägnierung ist eine Anreicherung der hydrophoben Bestandteile an der Oberfläche wünschenswert, so dass eine Migration der Fettsäuren an die Oberfläche kein Problem darstellt, während dies bei einem Klebstoff oder einer Beschichtung zu Haftungsproblemen führen kann.

Unter den hydrophoben Mono- resp. Oligomeren kommt den Epoxyacrylaten eine spezielle Bedeutung zu. Unter Epoxyacrylaten werden gemeinhin die Umsetzungsprodukte zwischen Acryl- oder Methacrylsäure und epoxygruppenenthaltenden Verbindungen bzw. Alkoholen verstanden, welche für die Herstellung von epoxygruppenenthaltenden Verbindung verwendet werden können. Die Verwendung von Epoxyacrylaten als Klebemassen ist in der Patentliteratur breit beschrieben. Ein wichtiger Bereich ihres Einsatzes liegt im Bereich von Dübelmassen und chemischen Verankerungen. EP 0 199 671, DE 36 17 702 sowie US 4 729 696 beschreiben alle 2-komponentige Klebmassen für die chemische Befestigungstechnik, welche Epoxyacrylate enthalten, jedoch zwecks Viskositätsverminderung stets in Kombination mit einem Reaktivverdünner, wie beispielsweise Styrol oder Methylmethacrylat oder aber mit i-Butyl- oder i-Propylmethacrylat (DE 36 17 702). Die aufgeführten Reaktivverdünner weisen allesamt einen tiefen Flammpunkt auf, was zu Sicherheitsrisiken bei der Applikation und Lagerung führen kann. Zudem eignen sich die in den genannten Patenten beschriebenen Zusammensetzungen nicht als Kleb- oder Beschichtungssysteme für mineralische Untergründe, im speziellen für feuchten Beton nach andauernder Exposition von Wasser.

EP 0 534 201 betrifft ein alkoxyliertes Epoxyacrylat, mit dem Vorteil, dass, durch die Alkoxilierung bedingt, ein niedrig viskoses Produkt erhalten wird, wodurch auf den Gebrauch von Reaktivverdünnern wie Styrol oder Methylmethacrylat verzichtet werden kann. Ein auf dieser Basis formulierter Klebstoff weist jedoch eine mangelnde Haftung auf feuchtem Beton auf.

Die Verwendung von cycloaliphatischen (Meth)-acrylaten, im speziellen Dicyclopentadienyl(meth)acrylat oder Dicyclopentadienyloxyethyl(meth)acrylat, in z.B. Dübelmassen ist bekannt, (siehe z.B. auch EP 0 431 302, EP 0 742 264 und US 5 256 723). Die Zusammensetzungen nach den obengenannten Patentdokumenten weisen jedoch mangelnde Haftung auf feuchtem Beton auf. Dicyclopentadienyl-(meth)acrylat weist den grossen Nachteil auf, dass es einen penetrant störenden Geruch aufweist, was die Anwendung dieses Monomers stark einschränkt. Dicyclopentadien, welches das Ausgangsmaterial sowohl für Dicyclopentadienyl(meth)acrylat als auch für Dicyclopentadienyloxyethyl(meth)acrylat darstellt, ist ebenfalls stark riechend, verfügt über einen tiefen Flammpunkt und ist toxisch, was in der Produktion dieser Monomere zu Problemen und Mehraufwand führt.

JP 11 106 453 beschreibt ein Bindemittel, welches vielseitig verwendet werden kann, unter anderem für die Reparatur von Beton. Dieses Bindemittel beinhaltet Epoxy(meth)acrylat, Hydroxy(meth)alkylacrylat sowie zwingendermassen Dicyclopentadienyloxyalkylen(meth)-acrylat und zeichnet sich durch eine geringe Empfindlichkeit gegenüber alkalischen Medien, verringerte Wasseraufnahme sowie eine gute Beständigkeit bei erhöhter Temperatur aus, allerdings ist die Feuchthaftung mangelhaft.

Urethanacrylate, welche durch die Umsetzung von Isocyanaten mit einem Hydroxyalkyl(meth)acrylat hergestellt werden, werden vielfach verwendet, weil sie eine einfache Variation der Mechanik erlauben. Nach den Patentanmeldungen EP 0 432 087 und EP 0 589 831 werden solche Urethanacrylate in Kombination mit Reaktivverdünnern wie Styrol oder anderen (Meth)acrylaten verwendet. Die Herstellung der Urethan(meth)acrylate ist aufgrund der notwendigen Verwendung von Isocyanaten mit grossem Gesundheitsrisiko bei der Produktion verbunden. Ein Alkohol wird mit einem Isocyanat bei erhöhter Temperatur in einer aufwendigen Reaktion umgesetzt. Es ist jedoch bekannt, dass (Meth)acrylate dazu neigen bei höherer Temperatur spontan zu polymerisieren, wobei innert kurzer Zeit grosse Mengen von Energie frei gesetzt werden. Deshalb ist die Herstellung von Urethanacrylaten mit einem Prozessrisiko verbunden. Die Notwendigkeit von Schutzmassnahmen und Vorrichtungen führt zu starkem finanziellen Mehraufwand. EP 0 589 831 offenbart eine Kombination von Epoxy- und/oder Ure-thanacrylaten mit anorganischen Bindemitteln und gegebenenfalls Reaktivverdünner, u.a. Hydroxyalkyl(meth)acrylat. Zemente, welche hierbei die bevorzugten hydraulisch abbindenden Bindemittel darstellen, sind jedoch sehr basisch und stellen deshalb ein Gefahrenpotential in Kontakt mit der Haut dar, weshalb ein Verzicht auf Zement vorteilhaft ist. Zudem ist durch die homogene Verteilung des Zementes eine inhärente Gefahr einer Verseifung der Acrylatmatrix vorhanden.

Es ist bekannt, dass die Verwendung von Silanen zu einer unter dem Einfluss von Wasser verbesserten Haftung gewisser Klebstoffe auf diversen Untergründen führt. Insbesondere ist die Wirkungsweise und Verwendung von Silanen in Epoxiden und Polyurethanen auf Glas und Metallen in der Literatur dokumentiert. Als Beispiel hierfür seien die Werke von Plueddemann erwähnt (Plueddemann E.P.in 'Silane Coupling Agents',Plenum Press,New York 1991 und Plueddemann E.P.in 'Silanes and other Coupling Agents',ed. Mital K.L.,VSP,Utrecht 1992).

Für die Verbesserung der Haftung von Acrylemulsionen auf mineralischen Untergründen wird in EP 0 587 332 Zusatz von Zinkoxid erwähnt. US 4 122 074 beschreibt ein Polyesteraminoalkylalkoxysilan, welches über eine Michael Addition eines aminofunktionellen Silans an einen ungesättigten konjugierten Polyesters hergestellt werden kann und welches als Haftvermittler zum Einsatz gelangen kann. Die Verwendung eines aminofunktionellen Silans in Acrylaten ist jedoch kritisch, da die Lagerstabilität als problematisch erachtet wird. EP 0 327 376 beschreibt die Herstellung eines Copolymeren von Vinylester und siliziumhaltigen Monomeren. Die daraus hergestellten Bindemittel für Emulsionsanstriche zeigen eine starke Verbesserung der Abriebfestigkeit gegenüber silanfreien Formulierungen. Als speziell geeignet werden Copolymere von Vinylacetat und Vinyltrimethoxysilan oder Methacryloxyethyltrimethoxysilan erwähnt. Emulsionspolymere weisen einen verbesserten Abriebwiderstand auf, wenn - wie in EP373866 beansprucht - ein Emulsionspolymer verwendet wird, dessen Herstellung in einem zweiten Schritt eine Nachreaktion von Epoxysilanen mit einer Vinylesteremulsion beinhaltet. FR 2 615 197 zeigt, dass eine auf Polymethylmethacrylat basierende Beschichtung auf mineralischen Untergründen ausgezeichnet haftet, wenn diese vorab mit wässrigen Silanen als Primer behandelt worden sind.

JP 10 297 982 beschreibt einen Betonprimer für die Betonreparatur, welcher neben 2.5-30 Gew.-% eines ungesättigten Alkoxysilans, 60-90 Gew.-% eines ungesättigten Epoxyesterharzes, 2.5-30 Gew.-% eines hydroxyfunktionellen (Meth)acrylatmonomers, sowie vorzugsweise ein Lösungsmittel mit einem Siedepunkt kleiner 120°C beinhaltet. Ein so hoher Silangehalt ist schlecht, um eine verlässliche Anfangshaftung vor allem bei hoch gefüllten Systemen auf feuchtem Beton zu gewährleisten.

Die Haftung von üblichen auf (Meth)acrylat basierenden Polymeren auf feuchten mineralischen Untergründen, speziell Beton, ist schlecht. Vor allem trifft dies für die Langzeithaftung nach Wasserlagerung zu. Eine gute Anfangshaftung auf solchen feuchten Untergründen kann mit Monomeren erzielt werden, welche hydrophile Eigenschaften aufweisen, wie beispielsweise Hydroxyethyl (meth)acrylat oder Hydroxypropyl(meth)acrylat. Aus solchen hydrophilen Monomeren resultierende Polymere nehmen bei Wasserlagerung jedoch stark Wasser auf, was zu einer Erniedrigung der Eigenfestigkeit einerseits und der Haftung auf dem Untergrund andererseits führt.

Polymere, die aus hydrophoben (Meth)acrylatMonomeren und/oder -Oligomeren resultieren, weisen generell schlechte Anfangshaftung auf mineralischen Untergründen, im speziellen feuchtem Beton, auf.

Es ist deshalb wünschenswert, ein Polymer mit sowohl guter Anfangshaftung als auch mit guter Endhaftung und Eigenfestigkeit zu haben.

### Darstellung der Erfindung

Überraschenderweise wurde nun gefunden, dass durch die Kombination von (Meth)acrylat-Monomeren und/oder -Oligomeren unterschiedlicher Hydrophilie resp. Hydrophobie in bestimmten Verhältnissen eine Verbesserung der Anfangshaftung auf feuchten mineralischen Untergründen, insbesondere Beton, sowie der Langzeithaftung nach Wasserlagerung erzielt werden kann. Dieser Effekt, speziell bei höheren Temperaturen, wird durch die Zugabe von Silanen noch verstärkt.

Durch die Auswahl der in der Folge als eher hydrophob eingestuften Monomeren kann die Vernetzungsdichte und damit auch die Mechanik gesteuert werde. So führen beispielsweise starre difunktionelle Monomere bzw. Oligomere zu starren Systemen mit hoher Festigkeit, während monofunktionelle, aliphatische Monomere zu weichen und flexiblen Systemen führen.

Eine schnelle Aushärtung bei Raumtemperatur ist für viele Applikationen erstrebenswert, da bei einer schnellen Verklebung eine aufwendige Fixierung der Verbundpartner nicht mehr nötig ist und Kräfte schnell übertragen werden können. Bei Beschichtungen und Voranstrichen verhindert eine schnelle Aushärtung eine Verletzung der Oberfläche und/oder ermöglicht eine schnelle Überschichtbarkeit. All diese Eigenschaften sind von äusserst grossem finanziellen Vorteil, weil durch die Verwendung eines schnell aushärtenden Kleb- resp. Dichtstoffs oder einer schnell aushärtenden Beschichtung Arbeitszeiten und Ausfallzeiten reduziert werden können.

Eine Verkürzung der Aushärtezeit lässt sich zwar auch durch Wärmezuführung, z.B. Heizen mittels thermischen Quellen oder IR-Strahlung erreichen. Im Hoch- und Tiefbau ist dies jedoch vielfach nicht möglich.

Die vorliegende Erfindung betrifft deshalb insbesondere eine radikalisch härtbare Masse, die dadurch gekennzeichnet ist, dass sie eine Mischung von Monomeren bzw. Oligomeren unterschiedlicher Hydrophilie resp. Hydrophobie in bestimmten Verhältnissen enthält oder daraus besteht.

Eine erfindungsgemässe radikalisch härtbare Masse enthält oder besteht aus:
a) 31-60 Gew.-% mindestens eines hydroxyalkyl(meth)acrylates der Formel **A**, 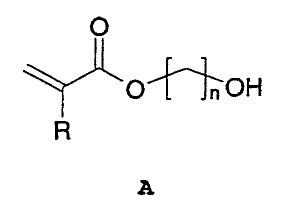 worin
   R=H, CH₃, und
   n = 2 - 4, vorzugsweise 3 oder 4 sind, und
b) 40-70 Gew.-% mindestens eines Monomeren und/oder Oligomeren B, das ausgewählt ist aus der Gruppe umfassend die folgenden Substanzen **B-1, B-2, B-3** und **B-4** oder Mischungen derselben, wobei
b-1) Verbindungen der Formel **B-1** 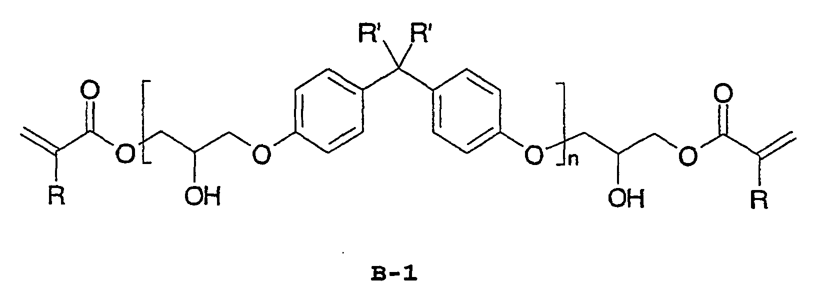 worin
   R = H, CH₃,
   R'= H, CH₃, und
   n = 1 oder 2 sind,
b-2) Verbindungen der Formel **B-2** 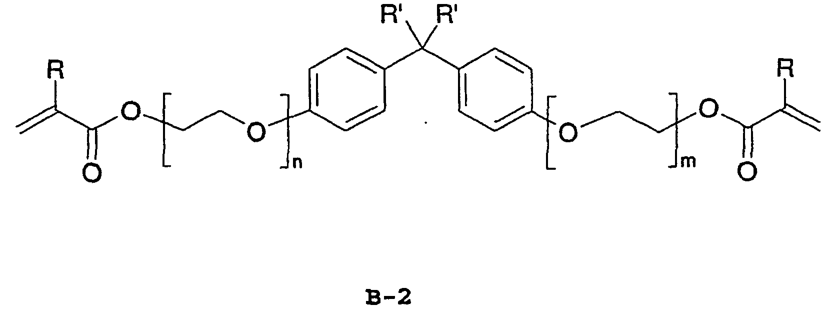 worin
   R = H, CH₃,
   R' = H, CH₃,
   n = 1 - 3, und
   m = 1 - 3 sind,
b-3) difunktionelle Alkylendi(meth)acrylate B-3, insbesondere difunktionelle Alkylendi(meth)acrylate, der folgenden Formel **B-3'** 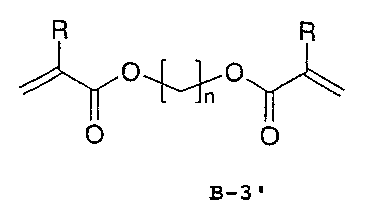 worin
   R = H, CH₃, und
   n = 2 - 6 sind und
b-4) monofunktionelle Alkyl(meth)acrylate B-4 bedeuten, wobei die monofunktionellen Alkyl(meth)acrylate vorzugsweise die folgende Formel **B-4'** aufweisen 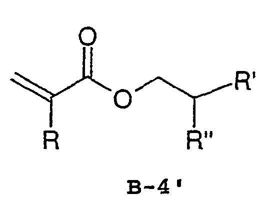 worin
   R = H oder CH₃,
   R'= H oder (CH₂)ₙCH₃ mit n = 0-2, insbesondere CH₂CH₃, und
   R"= C₃-C₂₀-Alkyl oder Phenoxy oder O-(CH₂)ₙ-CH₃ mit n = 0-2 ,insbesondere(CH₂)₃CH₃, sind,
   wobei die Summe der Gewichtsprozente von A + **B** = 100 Gew.-% gesetzt wurde und wobei die Summe der Gew.-% von **B-1** + **B-2** = 0-20 Gew.-%, der Gehalt an **B-3** = 0-45 Gew.-% und der Gehalt an **B-4** = 0-65 Gew.-% beträgt, und wobei mindestens eine der Verbindungen B-1, B-2 und/oder B-3 vorhanden ist. Die Verbindungen A sind hydrophiler als die Verbindungen B-1 bis B-4, weshalb die Verbindungen A auch als hydrophile, die Verbindungen B-1 bis B-4 als hydrophobe Komponenten bezeichnet werden. Die Summe von B-1 + B-2 + B-3 liegt üblicherweise im Bereich von >0 bis 65 Gew.-%, vorzugsweise im Bereich von 10 bis 65 Gew.-%, insbesondere im Bereich von 30 bis 65 Gew.-% und speziell bevorzugt um etwa 60 Gew.-%.

Gegebenenfalls kann die erfindungsgemässe Masse zudem Haftvermittler **C**, im speziellen Silane, vorzugsweise 3-Mercaptopropyltrimethoxysilan, (3-Methacryloyloxypropyl)trimethoxysilan und 3-Glycidyloxypropyltrimethoxysilan oder deren Triethoxy-Verbindungen und/oder Beschleuniger **D** enthalten, wobei der übliche Gehalt an **C** = 1-10 Gew.-% und der Gehalt an **D** = 0.5-5 Gew.-% je bezogen auf A + B = 100 Gew.-% beträgt.

Es hat sich als vorteilhaft herausgestellt, wenn solche radikalisch härtbaren Massen keine hydraulisch abbindenden und/oder polykondensierbaren anorganische Zusätze enthalten, wie Zement, Gips, Wasserglas etc. Solche abbindenden Zusätze können die Langzeitstabilität negativ beeinflussen.

### Wege zur Ausführung der Erfindung

Um eine verlässliche Anfangshaftung, vor allem bei hoch gefüllten Systemen auf feuchtem Beton, zu gewährleisten, beinhaltet die erfindungsgemässe Zusammensetzung mit 31 bis 60 Gew.-% einen relativ hohen Hydroxyalkyl(methacrylat)gehalt und mit 0-20 Gew.-% einen relativ kleinen Gehalt an Epoxyacrylaten. Zur weiteren Hydrophobierung werden der erfindungsgemässen Masse weitere Monomere beigemischt (B-3 und/oder B-4), insbesondere leicht erhältliche, kostengünstige Monomere. Ferner umfasst die Mischung höchstens 10 Gew.-% Silane, was der Anfangshaftung ebenfalls zuträglich ist währenddem auf jegliches Lösemittel, welches einen negativen Einfluss auf die Anfangsfestigkeit ausüben könnte, verzichtet wird.

Die erfindungsgemässe reaktive Masse ist folglich frei von Lösemitteln und stark riechenden Substanzen wie insbesondere Styrol und Methylmethacrylat. Sie ist toxikologisch vorteilhaft und verfügt über ein gutes Haftspektrum, so dass eine Vorbehandlung mittels Primer nicht nötig ist.

Durch das Hydroxyalkyl(meth)acrylat, das einen zentralen Bestandteil der erfindungsgemässen Zusammensetzung darstellt, verfügt die erfindungsgemässe reaktive Masse über eine ausgezeichnete Feuchthaftung.

Wie bereits erwähnt, können der erfindungsgemässen Masse zur weiteren Erhöhung der Haftung Haftvermittler, insbesondere Silane beigemengt werden. Die Verbesserung der Haftung lässt sich innert kurzer Zeit bei erhöhten Temperaturen und Kataplasmabedingungen (100 % relative Feuchte, 70°C) zeigen.

Die Auswahl und die Menge der als B bezeichneten, gegenüber **A** hydrophoberen (Meth)acrylate ist im Rahmen der angegebenen Grenzen abhängig von den gewünschten Eigenschaften des ausgehärteten Produktes. Flexible Systeme weisen eher einen höheren Gehalt an monofunktionellen Alkyl(meth)acrylaten auf als starre Systeme. Zudem sind bei der erfindungsgemässen Masse die hydrophoben Bestandteile in die Matrix eingebunden, so dass eine Separierung oder Migration nach Aushärtung dadurch verhindert ist.

Zur Beschleunigung der Reaktion wird vorzugsweise ein Aktivator verwendet. Geeignete Aktivatoren sind dem Fachmann bekannt. Als nicht beschränkende Beispiele seien genannt: tertiäre Amine wie N,N-Dimethylanilin, N,N-dimethyltoluidin, N,N-Diethylanilin, N,N-Diethyltoluidin, N,N-bis(2-hydroxyethyl)-p-Toluidin, ethoxylierte p-Toluidine, N,N-bis(2-hydroxyethyl)-p-toluidin etc.

Des weiteren können Salze oder Komplexe der Übergangsmetalle, insbesondere von Kobalt, Nickel und Kupfer zugegeben werden.

Die erfindungsgemässe Masse kann durch Radikale gehärtet werden. Zur Härtung werden ein oder mehrere Reaktionsinitatoren verwendet. Geeignete Initiatoren sind aus dem Stand der Technik bekannt. Speziell geeignet sind organische Peroxide, bevorzugt ist Benzoylperoxid.

Die Anwesenheit zusätzlicher Bestandteile in der Masse, wie Weichmacher, Additive zur Beeinflussung des Fliessverhaltens, der Entlüftung oder der Topfzeit, Polymerisationsinhibitoren sowie anorganischer und organischer Füllstoffe ist möglich. Der Gehalt an Füllstoffen ist abhängig von der Anwendung des Produktes, da er die Konsistenz beeinflusst, die von flüssig bis pastös sein kann. Für pastöse Systeme ist eine Menge an Füllstoffen bis 300 Gew.-% bezogen auf die Summe von A+B+C+D, d.h. Füllgrad 75%, möglich, bevorzugt sind jedoch Füllmengen zwischen 60 Gew.-% und 240 Gew.-%, d.h. Füllgrade von 37-70 %.

Von Bedeutung für Klebstoffe ist ein thixotropes Verhalten, was eine vertikale Applikation oder eine solche über Kopf ermöglicht, und ein Nachlaufen nach der Druckentlastung des Appliziergerätes verhindert. Es ist beispielsweise darauf zu achten, dass die Auspressbarkeit möglichst mittels Handauspressgeräten, auch bei relativ tiefen Temperaturen (z.B. 5°C), gegeben ist. Weiterhin sind bevorzugte Massen solche, die einen geringen Strömungswiderstand in einem Statikmischer bewirken.

Die erfindungsgemässe reaktive Masse kann für verschiedenste Anwendungen verwendet werden. Speziell geeignet ist sie für die Verwendung als Klebstoff und Abdichtungsmasse, vor allem für den Einsatz im Hoch- und Tiefbau. Als die Erfindung in keiner Weise beschränkende Beispiele für die Anwendung seien genannt: Beton-Reparaturmörtel, Rissinjektionen, Untergrundverfestigungen, Verankerungen von Dübeln und Armierungseisen, Kanalsanierungen, Haftanstriche, Brückensanierungen etc.

Die erfindungsgemässe Masse kann aber auch als Beschichtungsmasse zum Schutze einer Oberfläche verwendet werden, wobei eine erfindungsgemässe Masse mit einem Initiator versetzt und dann direkt, d.h. ohne Vorbehandlung, auf das Substrat aufgebracht wird.

Bei der Herstellung einer Verklebung oder Abdichtung unter Einbezug mindestens eines mineralischen Substrates, insbesondere feuchter Substrate, speziell Betons, wird entweder eine Schicht einer erfindungsgemässen Masse zwischen zwei Substrate gebracht, derart dass beide Substrate damit in Berührung stehen, oder eine Schicht einer erfindungsgemässen Masse wird auf ein erstes Substrat aufgebracht, worauf ein zweites Substrat auf die dem ersten Substrat abgewandte Oberfläche der erfindungsgemässen Masse aufgebracht wird.

Die Masse kann manuell oder maschinell appliziert werden, bevorzugt für kleinere Anwendungen sind Handapplikationsgeräte, wie beispielsweise 2-Komponenten-Kartuschen oder Mehrkammerbeutel, während für grössere Anwendungen Pumpen und/oder Roboter zum Einsatz gelangen können.

Die nachfolgend aufgeführten Beispiele sollen die Erfindung näher veranschaulichen ohne diese in irgendeiner Weise zu beschränken.

### Beispiele

Die in Tabelle 1 unten aufgeführten Beispiele sind einige mögliche Zusammensetzung von erfindungsgemässen Massen.

Die Formulierungen wurden jeweils auf Betongartenplatten appliziert. Die Betonplatten wurden zuvor sandgestrahlt, um eine allfällig vorhandene Betonhaut zu entfernen. Anschliessend wurden die Platten mit Wasser gereinigt.

Eine so vorbereitete "trockene" Gartenbetonplatte wies eine Oberflächenfeuchtigkeit von maximal 2% auf.

Die feuchte Betonplatte wurde nach der analogen Reinigung während mindestens 2 Wochen unter Wasser bei Raumtemperatur gelagert. Vor Gebrauch wurde das auf der Oberfläche der Platte vorhandene Wasser mit einem Lappen grob entfernt. Die so vorbereitete Betonplatte wies eine Oberflächenfeuchtigkeit zwischen 5 und 10% auf und wurde sofort für die Applikation eingesetzt.

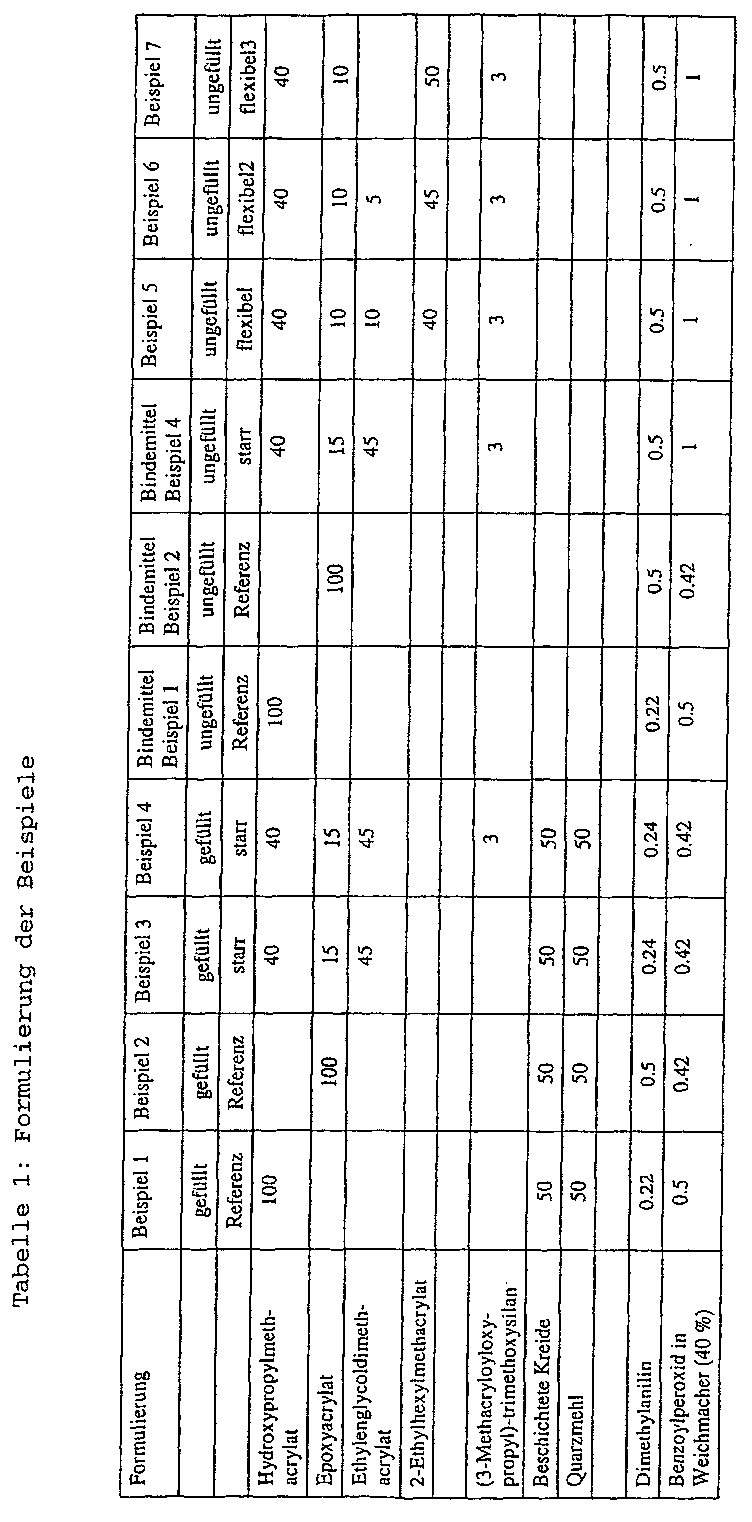

Die Formulierungen aus Tabelle 1 wurden in einer Schichtdicke von ca. 2 mm appliziert. Die Schichtdicke wurde mittels eines Selbstklebebandes dieser Dicke und dessen anschliessendes Abziehen gewährleistet.

Nach dem Messen des Haftzugwertes nach 24 Stunden (entspricht Anfangswert in Tabelle 2) wurden die Platten bei Raumtemperatur unter Wasser gelagert.

Zur Messung des Haftzugwertes wurde eine Kernbohrung von 3 cm Durchmesser und ca. 2 cm Tiefe durchgeführt. Die zu verklebende Oberfläche wurde abgetrocknet und angeschliffen. Anschliessend wurde eine Stahlrondelle mittels eines schnellhärtenden Methacrylatklebstoffs aufgeklebt und die Haftung mittels Haftzuggerät mit einer Zuggeschwindigkeit von ca. 2 mm/min getestet.

Für die Wasseraufnahme wurden Zugfestigkeitshanteln hergestellt und die Gewichtszunahme nach Unterwasserlagerung mittels Wägung im Vergleich zum jeweiligen Gewicht vor der Wasserlagerung bestimmt.

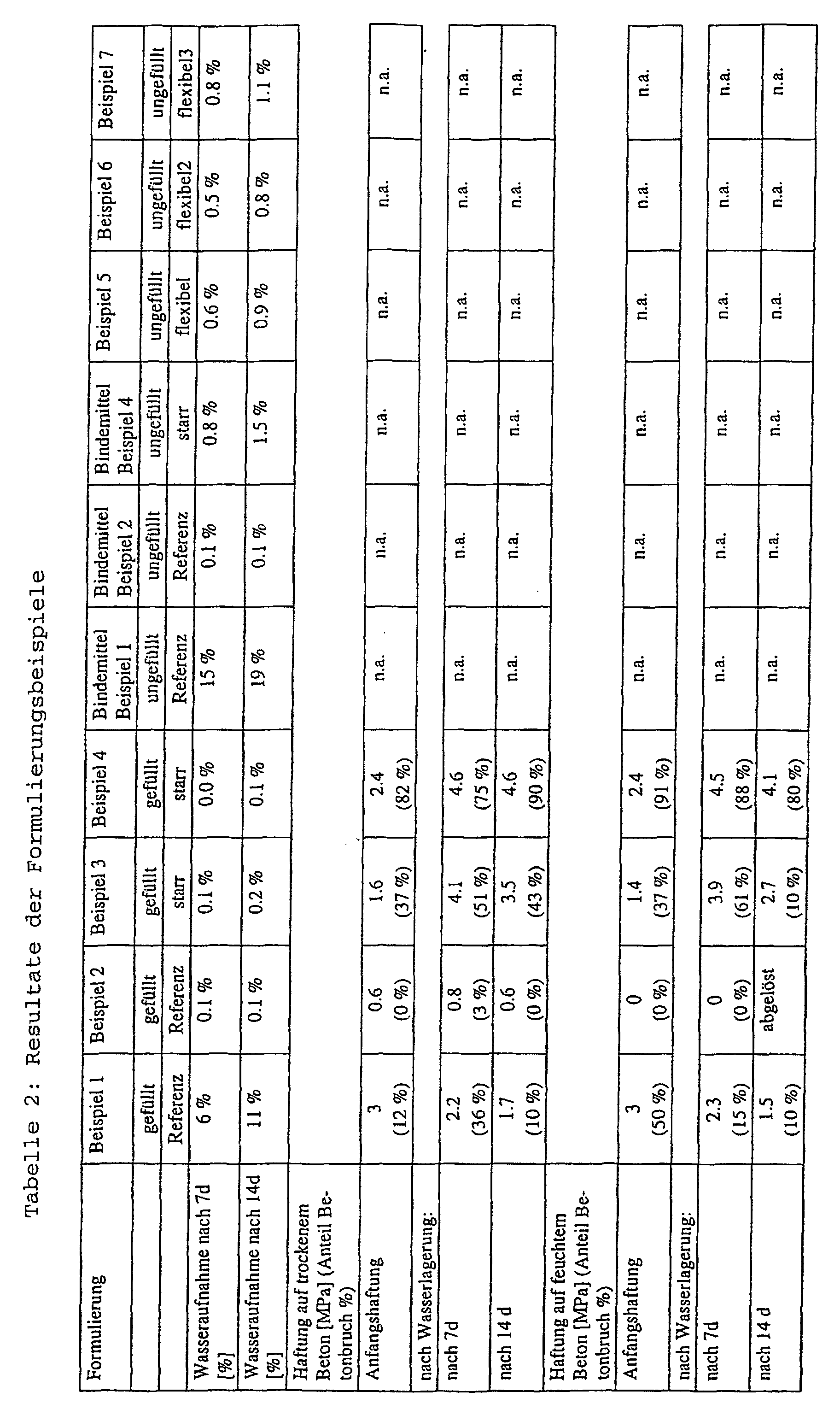

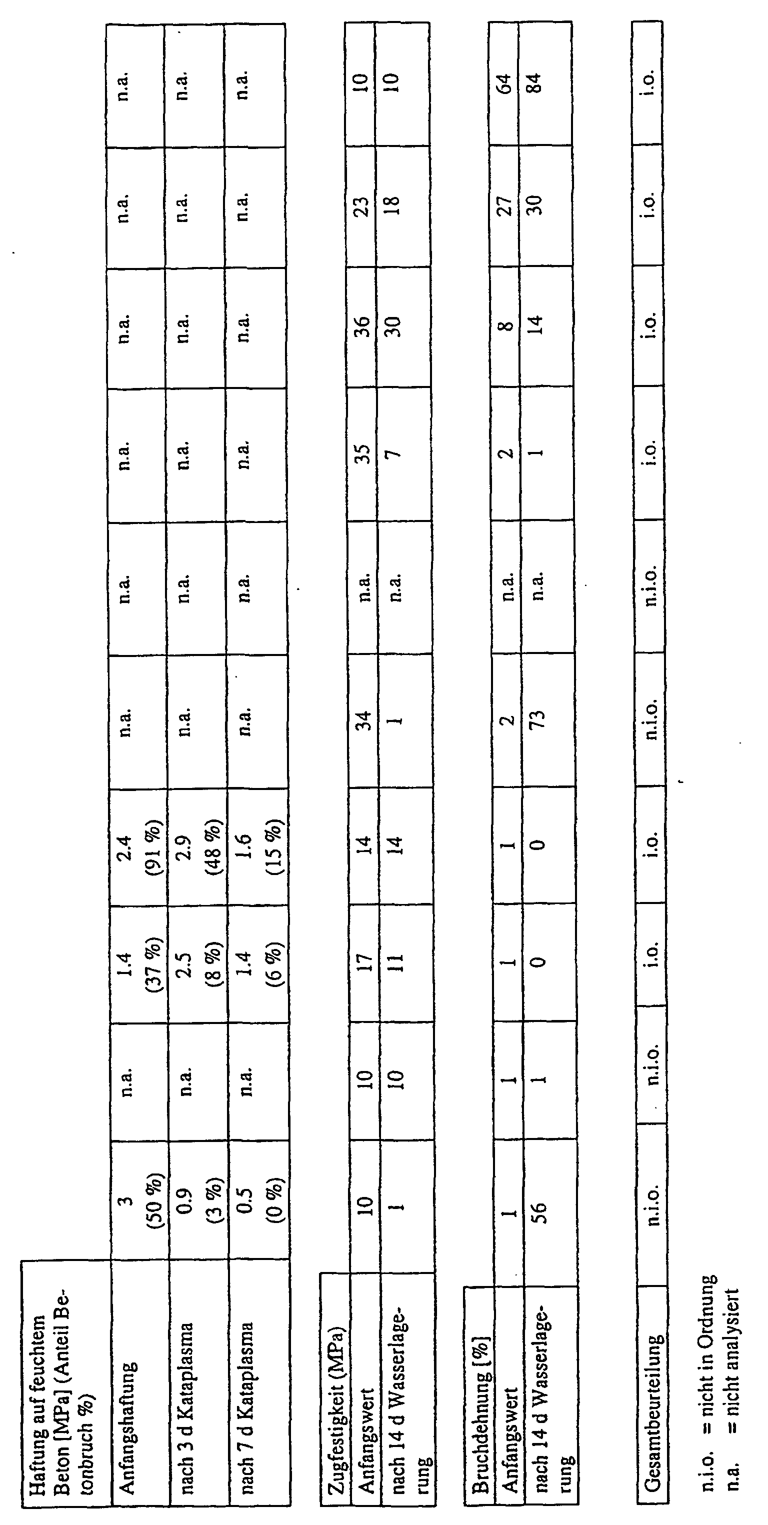

Aus den Resultaten der Tabelle 2 ist ersichtlich, dass reines Hydroxypropylacrylat (Beispiel 1) sehr schnell grosse Mengen an Wasser aufnimmt und in der Zugfestigkeit und den Haftzugfestigkeiten schnell abnimmt.

Das Bruchbild der Feuchthaftung verschlechtert sich bereits nach kurzem Einfluss des Wassers sehr rasch, und es tritt vermehrt adhäsiver Bruch auf.

Beim reinen Epoxyacrylat (Beispiel 2) kann keine Anfangshaftung auf feuchtem Beton festgestellt werden, während die Wasseraufnahme nach Lagerung aber gering ist.

Die Trockenhaftung des reinen Epoxyacrylates ist von Beginn an auf sehr tiefem Niveau.

Die Abmischung (Beispiel 3) zeigt, dass sowohl Anfangshaftung auf feuchtem Beton als auch die Langzeithaftung gewährleistet ist. Um den Einfluss des Silans auf die Haftung zu sehen wurde Beispiel 4 durchgeführt. Es zeigt sich, dass mit Silan vermehrt Betonbruch auf einem höheren Niveau stattfindet. Unter den drastischen Bedingungen der Kataplasma-Lagerung (70°C/100 % rel. Luftfeuchtigkeit) ist ersichtlich, dass die Formulierungen der Beispiele 3 und 4 im Vergleich zu jener des Beispiels 1 sehr viel länger hohe Haftungswerte mit einem grossen Anteil an Betonbruch aufweisen. Der positive Einfluss des Silans ist auch hier ersichtlich. Die Messungen unter Kataplasmabedingungen dienen als Simulation der Langzeitwasserlagerung bei Raumtemperatur, so dass frühzeitig Änderungen sichtbar sind.

Beispiele 5 und 6 zeigen, dass durch die geschickte Wahl der hydrophoben Monomere flexible Bindemittel hergestellt werden können. Auf die Bestimmung weiterer Werte wurde verzichtet.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Radikalisch härtbare Masse, **dadurch gekennzeichnet, dass** sie die folgende Zusammensetzung umfasst:
**a)** 31-60 Gew.-% mindestens eines Hydroxyalkyl(meth)acrylates der Formel A 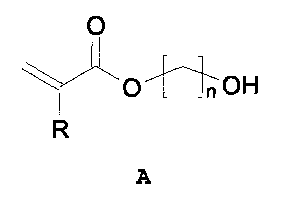 worin
R=H, CH₃, und
n = 2 - 4, vorzugsweise 3 oder 4 sind, und
**b)** 40-70 Gew.-% mindestens eines Monomeren und/oder Oligomeren **B,** ausgewählt aus den folgenden Substanzen **B-1, B-2, B-3** und **B-4** oder Mischungen derselben, wobei
**b-1)** Verbindungen der Formel **B-1** 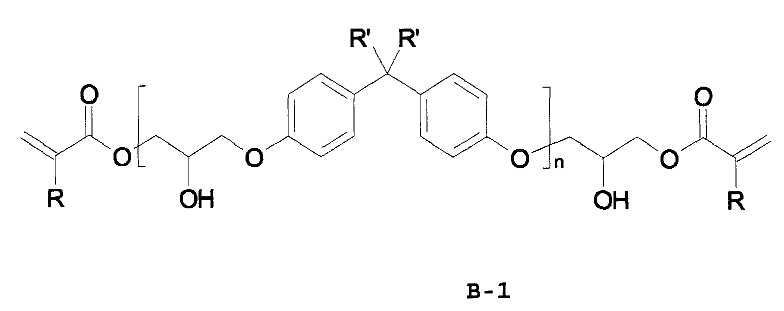 worin
R = H, CH₃
R' = H, CH₃, und
n = 1 oder 2 sind,
**b-2)** Verbindungen der Formel **B-2** 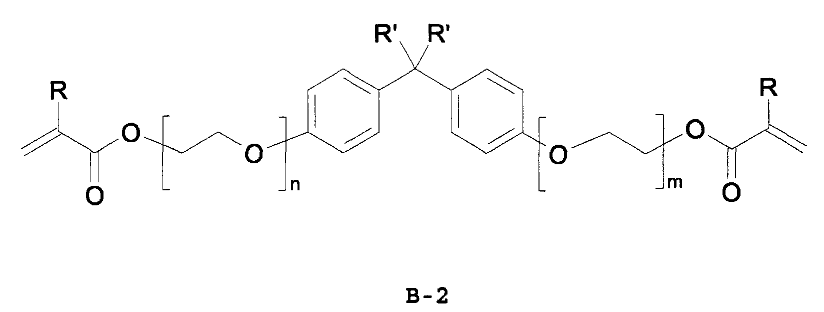 worin
R = H, CH₃ ,
R'= H, CH3,
n = 1 - 3, und
m = 1 - 3 sind,
**b-3)** difunktionelle Alkylendi(meth)acrylate **B-3**, und
**b-4)** monofunktionelle Alkyl(meth)acrylate **B-4** bedeuten, und
wobei die Summe der Gewichtsprozente von **A + B** = 100 Gew.-% gesetzt wurde, und wobei die Summe der Gew.-% von **B-1** + **B-2** = 0-20 Gew.-%, der Gehalt an **B-3** = 0-45 Gew.-% und der Gehalt an **B-4** = 0-65 Gew.-% beträgt, und wobei mindestens eine Verbindung B ausgewählt ist aus der Gruppe umfassend B-1, B-2, B-3 und Mischungen derselben.

2. Radikalisch härtbare Masse gemäss Anspruch 1, **dadurch gekennzeichnet, dass** sie zusätzlich eine Verbindung B-4 enthält.

3. Radikalisch härtbare Masse gemäss einem der vorangehenden Ansprüche, **dadurch gekennzeichnet, dass B-3** ausgewählt ist aus mindestens einem difunktionellen Alkylendi(meth)acrylat der folgenden Formel **B-3'** 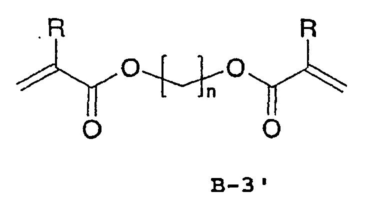 worin
R = H, CH₃ und
n = 2 - 6 sind.

4. Radikalisch härtbare Masse gemäss einem der vorangehenden Ansprüche, **dadurch gekennzeichnet, dass B-4** ausgewählt ist aus einem oder mehreren monofunktionellen Alkyl(meth)acrylaten der folgenden Formel **B-4'** 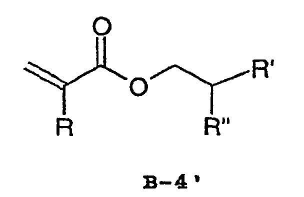 worin
R = H oder CH₃,
R'= H öder (CH₂)ₙCH₃ mit n = 0-2, insbesondere CH₂CH₃, und
R"= C₃-C₂₀-Alkyl oder Phenoxy oder O-(CH₂)ₙ-CH₃ mit n = 0-2 ,insbesondere(CH₂)₃CH₃, sind.

5. Radikalisch härtbare Masse gemäss einem der vorangehenden Ansprüche, **dadurch gekennzeichnet, dass** sie zudem Haftvermittler **C** enthält, wobei der Gehalt an **C** = 1-10 Gew.-% bezogen auf **A + B** = 100 Gew.-% beträgt.

6. Radikalisch härtbare Masse gemäss Anspruch 5, **dadurch gekennzeichnet, dass** der Haftvermittler **C** ein Silan ist, insbesondere ein Silan ausgewählt aus der folgenden Gruppe: 3-Mercaptopropyltrimethoxysilan, (3-Methacryloyloxypropyl)trimethoxysilan und 3-Glycidyloxypropyltrimethoxysilan oder deren Triethoxy-Verbindungen oder Mischungen der genannten Silane.

7. Radikalisch härtbare Masse gemäss einem der vorangehenden Ansprüche, **dadurch gekennzeichnet, dass** sie zudem Beschleuniger **D** enthält, wobei der Gehalt an D = 0.5-5 Gew.-% bezogen auf **A** + **B** = 100 Gew.-% beträgt.

8. Radikalisch härtbare Masse gemäss Anspruch 7, **dadurch gekennzeichnet, dass** der Beschleuniger **D** ein Aktivator ist, insbesondere ein tertiäres Amin und/oder ein Salz und/oder ein Komplex der Übergangsmetalle.

9. Radikalisch härtbare Masse gemäss Anspruch 8, **dadurch gekennzeichnet, dass** der Beschleuniger **D** ausgewählt ist aus der Gruppe umfassend N,N-Dimethylanilin, N,N-dimethyltoluidin, N,N-Diethylanilin, N,N-Diethyltoluidin, N,N-bis(2-hydroxyethyl)-p-Toluidin, ethoxylierte p-Toluidine, N,N-bis(2-hydroxyethyl)-p-toluidin oder Mischungen derselben.

10. Radikalisch härtbare Masse gemäss Anspruch 8, **dadurch gekennzeichnet, dass** die Salze und/oder Komplexe der Übergangsmetalle ausgewählt sind aus Salzen oder Komplexen der Übergangsmetalle Kobalt, Nickel und/oder Kupfer.

11. Radikalisch härtbare Masse gemäss einem der vorangehenden Ansprüche, **dadurch gekennzeichnet, dass** sie zur Aushärtung mindestens einen Reaktionsinitiator enthält, insbesondere mindestens ein organisches Peroxid, speziell bevorzugt Benzoylperoxid.

12. Radikalisch härtbare Masse gemäss einem der vorangehenden Ansprüche, **dadurch gekennzeichnet, dass** sie zusätzliche Bestandteile enthält, ausgewählt aus der Gruppe umfassend Weichmacher, Additive zur Beeinflussung des Fliessverhaltens, Additive zur Beeinflussung der Entlüftung, Additive zur Beeinflussung der Topfzeit, Polymerisationsinhibitoren, anorganische Füllstoffe, organische Füllstoffe und Mischungen derselben.

13. Radikalisch härtbare Masse gemäss einem der vorangehenden Ansprüche, **dadurch gekennzeichnet, dass** sie neben dem mindestens einen Hydroxyalkyl(meth)acrylat der Formel A und mindestens einer Verbindung der Formel B mindestens einen Beschleuniger D, mindestens einen Reaktionsinitiator und mindestens eine weitere Verbindung ausgewählt aus der Gruppe bestehend aus Haftvermittler C, Weichmacher, Additiv zur Beeinflussung des Fliessverhaltens, Additiv zur Beeinflussung der Topfzeit, organische Füllstoffe, anorganische Füllstoffe und Mischungen derselben enthält oder daraus besteht.

14. Radikalisch härtbare Masse gemäss Anspruch 13, **dadurch gekennzeichnet, dass** sie aus mindestens einem Hydroxyalkyl(meth)acrylat der Formel A und mindestens einer Verbindung der Formel B, mindestens einem Beschleuniger D, mindestens einem Reaktionsinitiator und mindestens eine weitere Verbindung ausgewählt aus der Gruppe bestehend aus Haftvermittler C, Weichmacher, Additiv zur Beeinflussung des Fliessverhaltens, Additiv zur Beeinflussung der Topfzeit, organische Füllstoffe, anorganische Füllstoffe und Mischungen derselben besteht.

15. Radikalisch härtbare Masse gemäss Anspruch 13 oder 14, **dadurch gekennzeichnet, dass** die mindestens eine weitere Verbindung einen Haftvermittler C enthält oder daraus besteht.

16. Radikalisch härtbare Masse gemäss einem der Ansprüche 13 bis 15, **dadurch gekennzeichnet, dass** die mindestens eine weitere Verbindung ein Additiv zur Beeinflussung der Topfzeit enthält oder daraus besteht.

17. Radikalisch härtbare Masse gemäss einem der Ansprüche 13 bis 16, **dadurch gekennzeichnet, dass** die mindestens eine weitere Verbindung ein Additiv zur Beeinflussung der Topfzeit enthält oder daraus besteht.

18. Radikalisch härtbare Masse gemäss einem der Ansprüche 13 bis 17, **dadurch gekennzeichnet, dass** die mindestens eine weitere Verbindung organische und/oder anorganische Füllstoffe enthält oder daraus besteht.

19. Radikalisch härtbare Masse gemäss Anspruch 13, **dadurch gekennzeichnet, dass** sie aus mindestens einem Hydroxyalkyl(meth)acrylat der Formel A und mindestens einer Verbindung der Formel B, mindestens einem Beschleuniger D, mindestens einem Reaktionsinitiator, mindestens einem Haftvermittler C, mindestens einem Weichmacher, mindestens einem Additiv zur Beeinflussung des Fliessverhaltens, mindestens einem Additiv zur Beeinflussung der Topfzeit und mindestens einem organischen und/oder anorganischen Füllstoff besteht.

20. Radikalisch härtbare Masse gemäss Anspruch 13, **dadurch gekennzeichnet, dass** sie aus mindestens einem Hydroxyalkyl(meth)acrylat der Formel A und mindestens einer Verbindung der Formel B, mindestens einem Beschleuniger D, mindestens einem Reaktionsinitiator, mindestens einem Weichmacher, mindestens einem Additiv zur Beeinflussung des Fliessverhaltens, mindestens einem Additiv zur Beeinflussung der Topfzeit, und mindestens einem organische und/oder mindestens einem anorganischen Füllstoff besteht.

21. Radikalisch härtbare Masse gemäss einem der vorangehenden Ansprüche, **dadurch gekennzeichnet, dass** die Summe von B-1 + B-2 + B-3 im Bereich von >0 bis 65 Gew.-% liegt, vorzugsweise im Bereich von 10 bis 65 Gew.-%, insbesondere im Bereich von 30 bis 65 Gew.-% und speziell bevorzugt um etwa 60 Gew.-%.

22. Verwendung einer radikalisch härtbaren Masse gemäss einem der vorangehenden Ansprüche als Beschichtungsmasse.

23. Verwendung einer radikalisch härtbaren Masse gemäss einem der Ansprüche 1 bis 21 als Klebstoff und/oder Dichtungsmasse.

24. Verwendung gemäss Anspruch 22 oder 23 auf feuchten mineralischen Substraten, insbesondere Beton.

25. Verfahren zur Beschichtung eines mineralischen Substrats wie Beton, insbesondere eines feuchten mineralischen Substrats, **dadurch gekennzeichnet, dass** eine radikalisch härtbare Masse gemäss einem der Ansprüche 1 bis 21 direkt, d.h. ohne Vorbehandlung, auf das Substrat aufgebracht wird.

26. Verfahren zur Verklebung oder Abdichtung mineralischer Substrate, insbesondere feuchter Substrate, speziell Beton, **dadurch gekennzeichnet, dass** eine Schicht einer radikalisch härtbaren Masse gemäss einem der Ansprüche 1 bis 21 zwischen zwei Substrate gebracht wird, derart dass beide Substrate damit in Berührung stehen.

27. Verfahren zur Verklebung oder Abdichtung mineralischer Substrate, insbesondere feuchter Substrate, speziell Beton, **dadurch gekennzeichnet, dass** eine Schicht einer radikalisch härtbaren Masse gemäss einem der Ansprüche 1 bis 21 auf ein erstes Substrat aufgebracht wird, und dass anschliessend ein zweites Substrat auf die dem ersten Substrat abgewandte Oberfläche der radikalisch härtenden Masse aufgebracht wird.

## Claims

1. Radically curable composition, **characterized in that** it comprises:
**a)** 31-60% by weight of at least one hydroxyalkyl (meth)acrylate of the formula **A**, 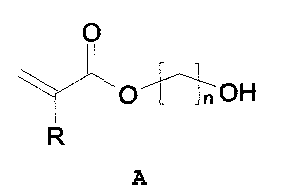 in which
R=H, CH₃, and
n = 2 - 4, preferably 3 or 4, and
**b)** 40-70% by weight of at least one monomer and/or oligomer **B** selected from the following substances **B-1, B-2, B-3,** and **B-4** or mixtures thereof, where
**b-1)** denotes compounds of the formula **B-1** 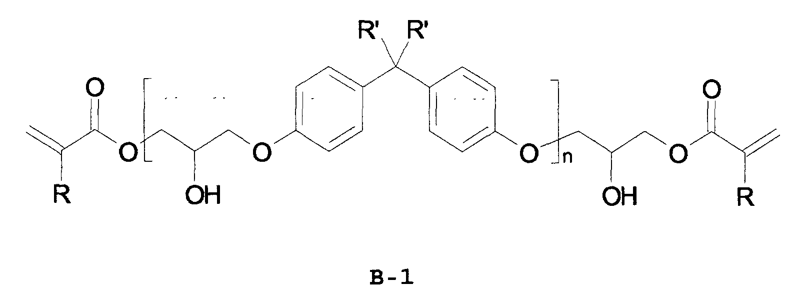 in which
R = H, CH₃,
R' = H, CH₃, and
n = 1 or 2,
**b-2)** denotes compounds of the formula **B-2** 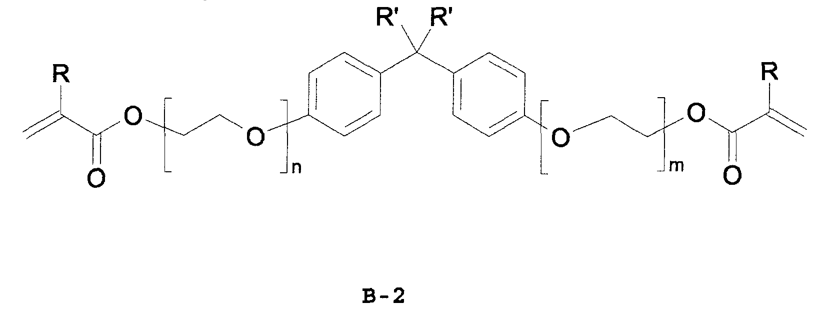 in which
R = H, CH₃,
R'= H, CH₃,
n = 1 - 3, and
m = 1 - 3,
**b-3)** denotes difunctional alkylene di(meth)acrylates **B-3**, and
**b-4)** denotes monofunctional alkyl (meth)acrylates **B-4**, and
the sum of the weight percentages of **A + B** having been set at 100% by weight and the sum of the percentages by weight of **B-1** + **B-2** is 0-20% by weight, the amount of **B-3** is 0-45% by weight, and the amount of **B-4** is 0-65% by weight, and where at least one compound B is selected from the group consisting of B-1, B-2, B-3, and mixtures thereof.

2. Radically curable composition according to Claim 1, **characterized in that** it further comprises a compound B-4.

3. Radically curable composition according to one of the preceding claims, **characterized in that B-3** is selected from at least difunctional alkylene di(meth)acrylate of the following formula **B-3'** 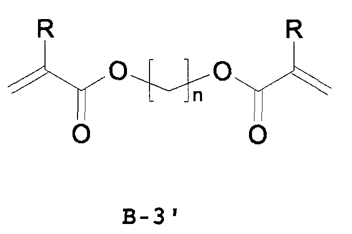 in which
R = H, CH₃ and
n = 2 - 6.

4. Radically curable composition of one according to the preceding claims, **characterized in that B-4** is selected from one or more monofunctional alkyl (meth)acrylates of the following formula B-4' 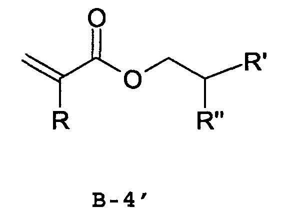 in which
R = H or CH₃,
R' = H or (CH₂)_{N} CH₃ with n = 0-2, especially CH₂CH₃, and
R" = C₃-C₂₀ alkyl or phenoxy or O-(CH₂)ₙ-CH₃ with n = 0-2, especially (CH₂)₃CH₃.

5. Radically curable composition according to one of the preceding claims, **characterized in that** it further comprises adhesion promoter **C**, the amount of **C** being 1-10% by weight based on **A + B** = 100% by weight.

6. Radically curable composition according to Claim 5, **characterized in that** the adhesion promoter C is a silane, in particular a silane selected from the following group: 3-mercaptopropyltrimethoxysilane, (3-methacryloyloxypropyl)trimethoxysilane, and 3-glycidyloxypropyltrimethoxysilane or their triethoxy compounds or mixtures of said silanes.

7. Radically curable composition according to one of the preceding claims, **characterized in that** it further comprises accelerator **D,** the amount of **D** being 0.5-5% by weight based on **A** + **B** = 100% by weight.

8. Radically curable composition according to Claim 7, **characterized in that** the accelerator **D** is an activator, in particular a tertiary amine and/or a salt and/or a complex of the transition metals.

9. Radically curable composition according to Claim 8, **characterized in that** the accelerator **D** is selected from the group consisting of N,N-dimethylaniline, N,N-dimethyltoluidine, N,N-diethylaniline, N,N-diethyltoluidine, N,N-bis(2-hydroxyethyl)-p-toluidine, ethoxylated p-toluidines, N,N-bis(2-hydroxyethyl)-p-toluidine or mixtures thereof.

10. Radically curable composition according to Claim 8, **characterized in that** the salts and/or complexes of the transition metals are selected from salts or complexes of the transition metals cobalt, nickel and/or copper.

11. Radically curable composition according to one of the preceding claims, **characterized in that** for curing it comprises at least one reaction initiator, in particular at least one organic peroxide, with especial preference benzoyl peroxide.

12. Radically curable composition according to one of the preceding claims, **characterized in that** it comprises additional constituents selected from the group consisting of plasticizers, additives for influencing the rheology, additives for influencing the removal of air, additives for influencing the pot life, polymerization inhibitors, inorganic fillers, organic fillers, and mixtures thereof.

13. Radically curable composition according to one of the preceding claims, **characterized in that** in addition to the at least one hydroxyalkyl (meth)acrylate of the formula A and at least one compound of the formula B it comprises or consists of at least one accelerator D, at least one reaction initiator, and at least one further compound selected from the group consisting of adhesion promoter C, plasticizer, additive for influencing the rheology, additive for influencing the pot life, organic fillers, inorganic fillers, and mixtures thereof.

14. Radically curable composition according to Claim 13, **characterized in that** it consists of at least one hydroxyalkyl (meth)acrylate of the formula A and at least one compound of the formula B, at least one accelerator D, at least one reaction initiator, and at least one further compound selected from the group consisting of adhesion promoter C, plasticizer, additive for influencing the rheology, additive for influencing the pot life, organic fillers, inorganic fillers, and mixtures thereof.

15. Radically curable composition according to Claim 13 or 14, **characterized in that** the at least one further compound comprises or consists of an adhesion promoter C.

16. Radically curable composition according to one of Claims 13 to 15, **characterized in that** the at least one further compound comprises or consists of an additive for influencing the pot life.

17. Radically curable composition according to one of Claims 13 to 16, **characterized in that** the at least one further compound comprises or consists of an additive for influencing the pot life.

18. Radically curable composition according to one of Claims 13 to 17, **characterized in that** the at least one further compound comprises or consists of organic and/or inorganic fillers.

19. Radically curable composition according to Claim 13, **characterized in that** it consists of at least one hydroxyalkyl (meth)acrylate of the formula A and at least one compound of the formula B, at least one accelerator D, at least one reaction initiator, at least one adhesion promoter C, at least one plasticizer, at least one additive for influencing the rheology, at least one additive for influencing the pot life, and at least one organic and/or inorganic filler.

20. Radically curable composition according to Claim 13, **characterized in that** it consists of at least one hydroxyalkyl (meth)acrylate of the formula A and at least one compound of the formula B, at least one accelerator D, at least one reaction initiator, at least one plasticizer, at least one additive for influencing the rheology, at least one additive for influencing the pot life, and at least one organic and/or at least one inorganic filler.

21. Radically curable composition according to one of the preceding claims, **characterized in that** the sum of B-1 + B-2 + B-3 is in the range from >0 to 65% by weight, preferably in the range from 10 to 65% by weight, in particular in the range from 30 to 65% by weight, and with especial preference around 60% by weight.

22. Use of a radically curable composition according to one of the preceding claims as a coating material.

23. Use of a radically curable composition according to one of Claims 1 to 21 as an adhesive and/or sealant.

24. Use according to Claim 22 or 23 on damp mineral substrates, especially concrete.

25. Method of coating a mineral substrate such as concrete, in particular a damp mineral substrate, **characterized in that** a radically curable composition according to one of Claims 1 to 21 is applied directly, i.e., without pretreatment, to the substrate.

26. Method of adhesively bonding or sealing mineral substrates, especially damp substrates, particularly concrete, **characterized in that** a layer of a radically curable composition according to one of Claims 1 to 21 is brought between two substrates in such a way that both substrates are in contact therewith.

27. Method of adhesively bonding or sealing mineral substrates, especially damp substrates, particularly concrete, **characterized in that** a layer of a radically curable composition according to one of Claims 1 to 21 is applied to a first substrate and **in that** subsequently a second substrate is applied to the opposite surface of the radically curing composition from the first substrate.

## Revendications

1. Masse durcissable par voie radicalaire, **caractérisée en ce qu'**elle comprend la composition suivante :
a) 31-60% en poids d'au moins un (méth)acrylate d'hydroxyalkyle de formule A 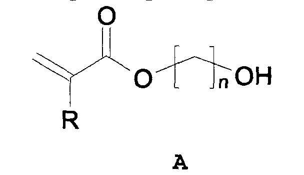 dans laquelle
R=H, CH₃, et
n = 2 - 4, de préférence 3 ou 4, et
b) 40-70% en poids d'au moins un monomère et/ou oligomère B, choisi parmi les substances suivantes B-1, B-2, B-3 et B-4 ou des mélanges de celles-ci, signifiant
b-1) des composés de formule B-1 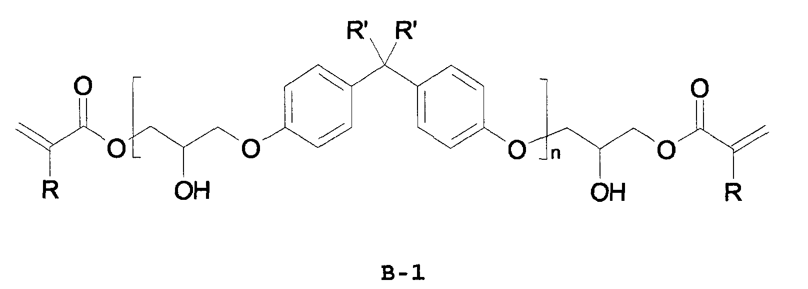 dans laquelle
R = H, CH₃
R' = H, CH₃, et
n = 1 ou 2,
b-2) des composés de formule B-2 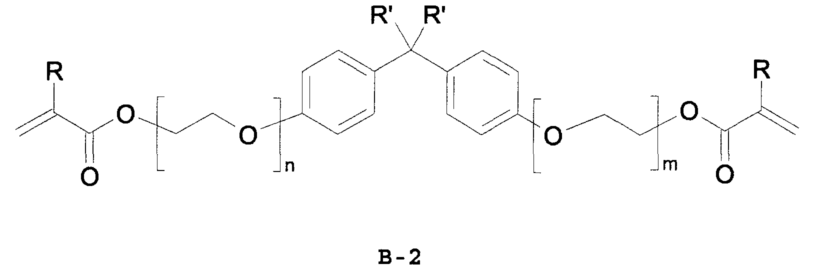 dans laquelle
R = H, CH₃,
R'= H, CH₃,
n = 1 - 3, et
m = 1 - 3,
b-3) des di(méth)acrylates d'alkylène difonctionnels B-3, et
b-4) des (méth)acrylates d'alkyle monofonctionnels B-4, et
la somme des % en poids de A + B étant réglée à 100% en poids et la somme des % en poids de B-1 + B-2 = 0-20% en poids, la teneur en B-3 = 0-45% en poids et la teneur en B-4 = 0-65% en poids, et au moins un composé B étant choisi dans le groupe comprenant B-1, B-2, B-3 et les mélanges de ceux-ci.

2. Masse durcissable par voie radicalaire selon la revendication 1, **caractérisée en ce qu'**elle contient en outre un composé B-4.

3. Masse durcissable par voie radicalaire selon l'une quelconque des revendications précédentes, **caractérisée en ce que** B-3 est choisi parmi au moins un di(méth)acrylate d'alkylène difonctionnel présentant la formule suivante B-3' 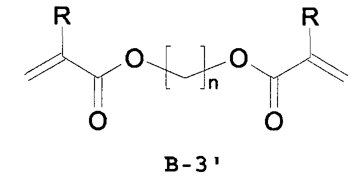 dans laquelle
R = H, CH₃ et
n = 2 - 6.

4. Masse durcissable par voie radicalaire selon l'une quelconque des revendications précédentes, **caractérisée en ce que** B-4 est choisi parmi un ou plusieurs (méth)acrylates d'alkyle monofonctionnels présentant la formule suivante B-4' 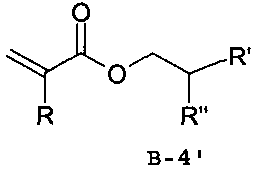 dans laquelle
R = H ou CH₃,
R' = H ou (CH₂)ₙCH₃ avec n = 0-2, en particulier CH₂CH₃, et
R"= alkyle en C₃-C₂₀ ou phénoxy ou O-(CH₂)ₙ-CH₃ avec n = 0-2, en particulier (CH₂)₃CH₃.

5. Masse durcissable par voie radicalaire selon l'une quelconque des revendications précédentes, **caractérisée en ce qu'**elle contient en outre un promoteur d'adhérence C, la teneur en C = 1-10% en poids par rapport à A + B = 100% en poids.

6. Masse durcissable par voie radicalaire selon la revendication 5, **caractérisée en ce que** le promoteur d'adhérence C est un silane, en particulier un silane choisi dans le groupe suivant: 3-mercaptopropyltriméthoxysilane, (3-méthacryloyloxypropyl)triméthoxysilane et 3-glycidyloxypropyltriméthoxysilane ou leurs composés triéthoxy ou les mélanges des silanes mentionnés.

7. Masse durcissable par voie radicalaire selon l'une quelconque des revendications précédentes, **caractérisée en ce qu'**elle contient en outre un accélérateur D, la teneur en D = 0,5-5% en poids par rapport à A + B = 100% en poids.

8. Masse durcissable par voie radicalaire selon la revendication 7, **caractérisée en ce que** l'accélérateur D est un activateur, en particulier une amine tertiaire et/ou un sel et/ou un complexe des métaux de transition.

9. Masse durcissable par voie radicalaire selon la revendication 8, **caractérisée en ce que** l'accélérateur D est choisi dans le groupe comprenant la N,N-diméthylaniline, la N,N-diméthyltoluidine, la N,N-diéthylaniline, la N,N-diéthyltoluidine, la N,N-bis(2-hydroxyéthyl)-p-toluidine, les p-toluidines éthoxylées, la N,N-bis(2-hydroxyéthyl)-p-toluidine ou les mélanges de ceux-ci.

10. Masse durcissable par voie radicalaire selon la revendication 8, **caractérisée en ce que** les sels et/ou les complexes des métaux de transition sont choisis parmi les sels ou les complexes des métaux de transition cobalt, nickel et/ou cuivre.

11. Masse durcissable par voie radicalaire selon l'une quelconque des revendications précédentes, **caractérisée en ce qu'**elle contient, pour le durcissement, au moins un initiateur de réaction, en particulier au moins un peroxyde organique, de manière particulièrement préférée un peroxyde de benzoyle.

12. Masse durcissable par voie radicalaire selon l'une quelconque des revendications précédentes, **caractérisée en ce qu'**elle contient des constituants supplémentaires, choisis dans le groupe comprenant les plastifiants, les additifs pour influencer le comportement d'écoulement, les additifs pour influencer le dégazage, les additifs pour influencer la durée de vie en pot, les inhibiteurs de polymérisation, les charges inorganiques, les charges organiques et les mélanges de ceux-ci.

13. Masse durcissable par voie radicalaire selon l'une quelconque des revendications précédentes, **caractérisée en qu'**elle contient ou est constituée par, outre ledit au moins un (méth)acrylate d'hydroxyalkyle de formule A et au moins un composé de formule B, au moins un accélérateur D, au moins un initiateur de réaction et au moins un autre composé choisi dans le groupe constitué par les promoteurs d'adhérence C, les plastifiants, les additifs pour influencer le comportement d'écoulement, les additifs pour influencer la durée de vie en pot, les charges organiques, les charges inorganiques et les mélanges de ceux-ci.

14. Masse durcissable par voie radicalaire selon la revendication 13, **caractérisée en ce qu'**elle est constituée par au moins un (méth)acrylate d'hydroxyalkyle de formule A et au moins un composé de formule B, au moins un accélérateur D, au moins un initiateur de réaction et au moins un autre composé, choisi dans le groupe constitué par les promoteurs d'adhérence C, les plastifiants, les additifs pour influencer le comportement d'écoulement, les additifs pour influencer la durée de vie en pot, les charges organiques, les charges inorganiques et les mélanges de ceux-ci.

15. Masse durcissable par voie radicalaire selon la revendication 13 ou 14, **caractérisée en ce que** ledit au moins un autre composé contient ou est constitué par un promoteur d'adhérence C.

16. Masse durcissable par voie radicalaire selon l'une quelconque des revendications 13 à 15, **caractérisée en ce que** ledit au moins un autre composé contient ou est constitué par un additif pour influencer la durée de vie en pot.

17. Masse durcissable par voie radicalaire selon l'une quelconque des revendications 13 à 16, **caractérisée en ce que** ledit au moins un autre composé contient ou est constitué par un additif pour influencer la durée de vie en pot.

18. Masse durcissable par voie radicalaire selon l'une quelconque des revendications 13 à 17, **caractérisée en ce que** ledit au moins un autre composé contient ou est constitué par des charges organiques et/ou inorganiques.

19. Masse durcissable par voie radicalaire selon la revendication 13, **caractérisée en ce qu'**elle est constituée par au moins un (méth)acrylate d'hydroxyalkyle de formule A et au moins un composé de formule B, au moins un accélérateur D, au moins un initiateur de réaction, au moins un promoteur d'adhérence C, au moins un plastifiant, au moins un additif pour influencer le comportement d'écoulement, au moins un additif pour influencer la durée de vie en pot et au moins une charge organique et/ou inorganique.

20. Masse durcissable par voie radicalaire selon la revendication 13, **caractérisée en ce qu'**elle est constituée par au moins un (méth)acrylate d'hydroxyalkyle de formule A et au moins un composé de formule B, au moins un accélérateur D, au moins un initiateur de réaction, au moins un plastifiant, au moins un additif pour influencer le comportement d'écoulement, au moins un additif pour influencer la durée de vie en pot et au moins une charge organique et/ou au moins une charge inorganique.

21. Masse durcissable par voie radicalaire selon l'une quelconque des revendications précédentes, **caractérisée en ce que** la somme de B-1 + B-2 + B-3 se situe dans la plage de >0 à 65% en poids, de préférence dans la plage de 10 à 65% en poids, en particulier dans la plage de 30 à 65% en poids et de manière particulièrement préférée à environ 60% en poids.

22. Utilisation d'une masse durcissable par voie radicalaire selon l'une quelconque des revendications précédentes comme masse de revêtement.

23. Utilisation d'une masse durcissable par voie radicalaire selon l'une quelconque des revendications 1 à 21 comme adhésif et/ou masse d'étanchéité.

24. Utilisation selon la revendication 22 ou 23 sur des substrats minéraux humides, en particulier le béton.

25. Procédé pour le revêtement d'un substrat minéral humide tel que le béton, en particulier d'un substrat minéral humide, **caractérisé en ce qu'**on applique une masse durcissable par voie radicalaire selon l'une quelconque des revendications 1 à 21 directement, c'est-à-dire sans prétraitement, sur le substrat.

26. Procédé pour coller ou rendre étanche des substrats minéraux, en particulier des substrats humides, de manière particulièrement préférée le béton, **caractérisé en ce qu'**on applique une couche d'une masse durcissable par voie radicalaire selon l'une quelconque des revendications 1 à 21 entre deux substrats, de telle manière que les deux substrats sont en contact avec celle-ci.

27. Procédé pour coller ou rendre étanche des substrats minéraux, en particulier des substrats humides, de manière particulièrement préférée le béton, **caractérisé en ce qu'**on applique une couche d'une masse durcissable par voie radicalaire selon l'une quelconque des revendications 1 à 21 sur un premier substrat et **en ce qu'**on applique ensuite un deuxième substrat sur la surface opposée au premier substrat de la masse durcissable par voie radicalaire.
